# EUROPEAN PATENT APPLICATION

(11) **EP 4 220 842 A1**
(43) Date of publication of application: **02.08.2023**
(21) Application number: 21872568.7
(22) Date of filing: 24.09.2021
(51) Int. Cl.: H01M 50/403, H01M 50/414, H01M 50/434, H01M 50/446, H01M 50/451, H01M 50/46, H01M 50/463, H01M 50/489

(54) **SEPARATOR FOR LEAD ACID STORAGE BATTERIES, AND LEAD ACID STORAGE BATTERY**

(30) Priority: 25.09.2020 JP 2020161071
(71) Applicant: Asahi Kasei Kabushiki Kaisha, Tokyo 1000006 (JP)
(72) Inventor: FUNAKI, Masuro, Tokyo 100-0006 (JP); IIZUKA, Yasuhito, Tokyo 100-0006 (JP); UOZUMI, Makoto, Tokyo 100-0006 (JP)
(74) Representative: Strehl Schübel-Hopf & Partner
(86) International application number: PCT/JP2021/035135
(87) International publication number: WO 2022/065439

(57) **Abstract**

The present invention provides a method for producing a separator for lead acid storage batteries, said method comprising a surface layer formation step which includes: a coating liquid preparation step wherein a coating liquid that contains a solvent, a conductive material and a high-molecular-weight compound is prepared; a coating step wherein the coating liquid obtained in the coating liquid preparation step is applied to at least one surface of a separator base material; and a solvent removal step wherein the solvent is removed from the coating liquid that has been applied to the separator base material in the coating step. With respect to this method for producing a separator for lead acid storage batteries, the high-molecular-weight compound is contained in an amount of from 0.1% by mass to 25% by mass relative to the solid content of the coating liquid.

## Description

### FIELD

The present invention relates to a method for producing a lead-acid battery separator, to a separator for a lead-acid battery, and to a lead-acid battery employing the same.

### BACKGROUND

Lead-acid batteries are widely used throughout the world in vehicles such as passenger vehicles, buses, trucks, two-wheel vehicles and golf carts, and in industrial equipment such as fork lifts, tillage machinery, railways, uninterruptible power systems (UPS) and communication devices. In regard to vehicles in particular, demand has been increasing in recent years for battery performance allowing operation of hybrid electric vehicles (HEV) and idling start-and-stop (ISS) vehicles in an approximately 50% to 80% partial state of charge (PSoC).

The main performance characteristics required for lead-acid batteries are charge acceptance performance, cycle characteristics and water loss performance. Lead-acid batteries provided with charge control functions or regenerative charging functions for improved environmental performance and fuel efficiency are limited with short opportunities for recharging. Charge acceptance is therefore required for high-energy charging of batteries in an efficient manner. The cycle characteristic of a battery kept in PSoC for long periods tends to be impaired. This is because a battery in PSoC tends to form highly crystalline sulfate salts on the electrode surfaces, with accumulation of the formed sulfate crystals drastically lowering the charge acceptance performance of the electrodes and eventually affecting the battery life. When a negative electrode reaches hydrogen generating potential, water is decomposed resulting in water loss. Improvement and maintenance of the water loss property is therefore desired from the viewpoint of maintainability.

A lead-acid battery separator usually is a membrane having a microporous structure with a withstand voltage property, and is disposed in a closely bonded state with the surfaces of both the positive electrode and negative electrode to prevent short circuiting. In the prior art, it has been attempted to improve lead-acid battery performance by modifying the separator structure or by controlling electrode surface reactions taking place at the close contact surfaces between the separator and electrodes.

PTL 1, for example, describes a technique for improving the charge acceptance and cycle life of a lead-acid battery by using a lead-acid battery separator either coated with or containing engineered carbon materials.

### [CITATION LIST]

### [PATENT LITERATURE]

[PTL 1] WO2015/171595

### SUMMARY

### [TECHNICAL PROBLEM]

As a result of much research, the present inventors have found that if engineered carbon materials are introduced onto the surface of a lead-acid battery separator, which may be, but is not limited to, the surface of the separator that is facing the negative electrode of the lead-acid battery, in order to form a layer on the separator surface, it is possible to impart electron conductivity to the separator surface and promote electrode reaction at the negative electrode.

However, in order to more stably exhibit the effects of improving the cycle characteristic and charge acceptance by the layer formed on the separator surface coated with the engineered carbon materials, some issues still remain including achieving stable formation of a layer with uniform electron conductivity, and preventing shedding of the formed layer from the separator surface.

The present invention has been accomplished in light of this situation, and its object is to provide a method for producing a lead-acid battery separator whereby a lead-acid battery with excellent cycle characteristics and charge acceptance can be obtained, as well as a lead-acid battery separator produced by the method.

### [SOLUTION TO PROBLEM]

The aforementioned problem is solved by the following technical means.
(1) A method for producing a lead-acid battery separator comprising a surface layer forming step which includes:
   a coating solution preparation step in which a coating solution comprising a solvent, a conductive material and a high molecular weight compound is prepared,
   a coating step in which the coating solution obtained in the coating solution preparation step is coated onto at least one side of a separator substrate, and
   a solvent removal step in which the solvent is removed from the coating solution that has been coated onto the separator substrate in the coating step,
   wherein the high molecular weight compound is present in an amount of 0.1 weight% to 25 weight% with respect to a solid component of the coating solution.
(2) The method for producing a lead-acid battery separator according to (1) above,
   wherein the high molecular weight compound has a viscosity of 3000 mPa·s to 10,000 mPa·s at 20°C when dissolved at 1 weight% with respect to a solvent in which the high molecular weight compound is soluble.
(3) The method for producing a lead-acid battery separator according to (1) or (2) above,
   wherein the high molecular weight compound is present in an amount of 1.0 weight% to 10.0 weight% with respect to the solid component of the coating solution.
(4) The method for producing a lead-acid battery separator according to any one of (1) to (3),
   wherein the conductive material includes a carbon material.
(5) The method for producing a lead-acid battery separator according to any one of (1) to (4),
   wherein the solvent is a solvent which is capable of dissolving the high molecular weight compound.
(6) The method for producing a lead-acid battery separator according to any one of (1) to (5),
   wherein the surface layer formed in the surface layer forming step has a surface electrical resistance of 10 Ω to 10,000 Ω.
(7) The method for producing a lead-acid battery separator according to any one of (1) to (6),
   wherein a surface layer formed in the surface layer forming step has a thickness of 0.1 µm to 30 µm.
(8) The method for producing a lead-acid battery separator according to any one of (1) to (7),
   which comprises an intermediate layer forming step in which an intermediate layer is formed between the separator substrate and the surface layer formed in the surface layer forming step.
(9) A lead-acid battery separator comprising:
   a separator substrate, and
   a surface layer laminated on at least one side of the separator substrate and having a surface electrical resistance of 10 Ω to 10,000 Ω.
(10) The lead-acid battery separator according to (9) above, wherein the surface layer comprises a conductive material.
(11) The lead-acid battery separator according to (9) or (10), wherein:
   the surface layer comprises a high molecular weight compound, the high molecular weight compound having a viscosity of 3000 mPa·s to 10,000 mPa·s when dissolved at 20°C in a solvent in which the high molecular weight compound is soluble.
(12) The lead-acid battery separator according to any one of (9) to (11), which comprises at least one intermediate layer between the separator substrate and the surface layer.
(13) The lead-acid battery separator according to any one of (9) to (12),
   wherein a thickness of the surface layer is 0.1 µm to 30 µm.
(14) The lead-acid battery separator according to any one of (9) to (13), wherein the substrate has a rib, the rib being at least one selected from the group consisting of serrated ribs, slanted ribs, broken ribs, straight ribs, embossings, protrusions and combinations thereof.
(15) A lead-acid battery comprising a positive electrode, a negative electrode, and the lead-acid battery separator according to any one of (9) to (14).
(16) The lead-acid battery according to (15) above, wherein the surface layer is facing the negative electrode and in contact with the negative electrode.

### [ADVANTAGEOUS EFFECTS OF INVENTION]

According to the invention, it is possible to form a layer with stable electron conductivity on the surface of a lead-acid battery separator, to produce a lead-acid battery separator having satisfactory cycle characteristics, with satisfactory charge acceptance performance by the lead-acid battery after elapse of a fixed cycle, and to provide a lead-acid battery using the separator.

### BRIEF DESCRIPTION OF DRAWINGS

Fig. 1 shows a 20x observation image of a lead-acid battery separator comprising the surface layer of Example 1, taken using a digital microscope.
Fig. 2 shows a 200x observation image of a cross-section of a lead-acid battery separator comprising the surface layer of Example 1, taken using a digital microscope.

### DESCRIPTION OF EMBODIMENTS

An embodiment of the invention (hereunder abbreviated as "embodiment") will now be described in detail. It is to be understood, incidentally, that the invention is not limited to the embodiment described below and may incorporate various modifications within the scope of the gist thereof. The lead-acid battery separator of the embodiment may also be referred to hereunder simply as "separator".

### <Method for producing lead-acid battery separator>

One aspect of the invention is a method for producing a separator comprising a step of forming a layer on the separator surface which includes a coating solution preparation step, a coating step in which the coating solution is coated onto at least one side of a separator substrate, and a step of removing the solvent of the coating solution that has been coated onto the separator substrate (drying step). The layer formed on the surface of the separator according to the invention is electroconductive, and has a uniform and continuous structure and thickness allowing it to maintain satisfactory electroconductivity, while exhibiting a surface resistivity (Ω) of 10 Ω to 10,000 Ω. The layer that is laminated on at least one side of the separator substrate and has a surface electrical resistance in the range of 10 Ω to 10,000 Ω may hereunder be referred to simply as "surface layer".

### <Coating solution preparation step>

The coating solution comprises a solvent, a conductive material and a high molecular weight compound, and is prepared by adding the conductive material and high molecular weight compound to the solvent. The conductive material used may be pre-mixed with an optional solvent, and may be used as a dispersion with the particle size of the conductive material adjusted to any desired particle size.

### <Solvent>

The solvent may be a single solvent or a mixed solvent comprising two or more different solvents. From the viewpoint of solvent removal in the subsequent steps, it is preferred to select a solvent that is unlikely to accumulate in and is easy to remove from the substrate, the conductive material and the high molecular weight compound. The solvent is also preferably one that can dissolve the high molecular weight compound described below.

Specific examples of solvents include the following:
water;
alcohols such as methanol, ethanol, 1-propanol, 2-propanol, 1-butanol, 2-butanol, tert-butyl alcohol and 3-methoxy-3-methyl-1-butanol;
glycols such as ethylene glycol, diethylene glycol, propylene glycol, propyleneglycol monomethyl ether, ethyleneglycol monomethyl ether, ethyleneglycol monoethyl ether, ethylene glycol-*t*-butyl ether, ethyleneglycol monobutyl ether, ethyleneglycol monopropyl ether, diethyleneglycol monobutyl ether, triethyleneglycol monobutyl ether, dipropyleneglycol monomethyl ether, ethyleneglycol dimethyl ether and dipropyleneglycol dimethyl ether;
ketones such as acetone, methyl ethyl ketone, methyl isobutyl ketone, diisobutyl ketone and cyclohexanone;
esters such as methyl acetate, ethyl acetate, propyl acetate, butyl acetate, γ-butyrolactone, γ-valerolactone and 6-valerolactone;
carbonates such as dimethyl carbonate, ethylmethyl carbonate, dimethyl carbonate and propylene carbonate;
carboxylic acids such as formic acid, acetic acid, ethylacetic acid and propionic acid;
inorganic acids such as sulfuric acid, hydrochloric acid and nitric acid;
amines such as ammonia water, monoethanolamine, diethanolamine and triethanolamine;
ethers such as diethyl ether, diisopropyl ether, 1,4-dioxane and tetrahydrofuran;
nitriles such as acetonitrile, propionitrile and benzonitrile;
phenols such as phenol, cresol and chlorophenol;
aprotic solvents such as methylene chloride, hexane, toluene, dimethyl sulfoxide, N,N-dimethylformamide, N,N-dimethyl acetamide, N-methyl-2-pyrrolidone and hexamethyl phosphate triamide; and
mixtures of two or more of the aforementioned solvents.

<Solid component>

The coating solution, comprising the conductive material and high molecular weight compound without the solvent, remains on the separator as a solid component in the subsequent steps, forming a surface layer. There are no particular restrictions on the solid component, but it is preferably uniformly dispersed in the coating solution beforehand from the viewpoint of forming a surface layer of uniform structure and thickness.

From the viewpoint of coatability in the coating step, the solid component is preferably adjusted to the desired solid component concentration in the coating solution. The concentration of the solid component in the coating solution is not limited since it will be selected depending on the coating method, but it is preferably 0.1 weight% to 70 weight%, more preferably 0.5 weight% to 50 weight% and even more preferably 0.5 weight% to 30 weight%.

The median particle size (d50) of the conductive material used to form the surface layer is preferably 0.01 µm to 50 µm, more preferably 0.01 µm to 30 µm and even more preferably 0.01 µm to 10 µm, from the viewpoint of easily forming a layer with uniform thickness and from the viewpoint of adjusting the surface electrical resistance.

### <Conductive material>

The conductive material forming the surface layer may be an inorganic or organic compound that has been imparted with electroconductivity using a conductor such as a metal or carbon material, a semiconductor, or doping. Optionally, the conductive material may be the main material of the surface layer. The main material forming the surface layer is a material constituting 50 weight% or greater of the total weight of the surface layer, preferably with the material constituting 70 weight% or greater, more preferably 80 weight% or greater and even more preferably 90 weight% or greater. The inorganic material may be a ceramic material such as alumina (Al₂O₃), zirconia (ZrO₂), silicon nitride (Si₃N₄) or silicon carbide (SiC). The carbon material may be formed of carbon atoms (C), for example. The surface layer of the embodiment preferably includes a carbon material from the viewpoint of conductivity. Examples of carbon materials include graphite, active carbon, carbon black, carbon clusters such as graphene and fullerene, carbon monolithic materials, and mixtures of the foregoing.

### <High molecular weight compound>

The viscosity of the high molecular weight compound at 20°C, as a 1 weight% solution of the high molecular weight compound in a solvent capable of dissolving it, is preferably 3000 mPa·s to 10,000 mPa·s, more preferably 5000 mPa·s to 10,000 mPa·s and even more preferably 6000 mPa·s to 10,000 mPa·s. The solvent capable of dissolving the high molecular weight compound may be a single solvent or a mixture of two or more different solvents. Examples of suitable solvents capable of dissolving high molecular weight compounds include water and mixed solvents containing water. In the case of a mixed solvent containing water, at least one type of solvent may be used for admixture with water, thus allowing three or more types of solvent including water.

The high molecular weight compound is preferably present in an amount of 0.1 weight% to 25 weight% with respect to the solid component of the coating solution, the amount in the coating solution being more preferably 0.5 weight% to 20 weight%, even more preferably 1 weight% to 10 weight% and yet more preferably 2 weight% to 10 weight%.

Since a lead-acid battery separator fabricated using a coating solution comprising a high molecular weight compound as a solid component has a high-strength surface layer formed on it, the surface layer is resistant to fracture in the separator production steps following the drying step, or in the lead-acid battery production steps, so that a surface layer having a uniform structure and thickness is stably formed and high surface electron conductivity is exhibited.

By using a lead-acid battery separator of the embodiment, it is possible to obtain a lead-acid battery with excellent charge acceptance and cycle characteristics. Without being limited to any particular theory, it is thought that the reason for this effect is as follows. Presumably the surface layer formed on the separator functions as an auxiliary conductive path for the electrode in the direction of the surface (x-axis-y-axis plane), thus promoting transfer of electrons during the electrode surface reaction. It is thought that as a result, the lead acid battery, which comprises positive and negative electrodes and a separator with a surface layer, has increased charge reaction efficiency at the negative electrode surface and consequently higher charge acceptance. Moreover, presumably the increased charge reaction efficiency inhibits growth of inactive lead sulfate (sulfation) that does not contribute to charge reaction on the negative electrode surface. Sulfation is a phenomenon in which lead sulfate undergoes progressive crystallization when in a prolonged period without decomposition, resulting in formation of non-degradable lead sulfate. Sulfation is one major mode that results in failure of lead-acid batteries. It is thought that the cycle characteristic of the lead acid battery of the embodiment is improved due to inhibited sulfation.

### <Surfactant>

The coating solution of the embodiment preferably includes a surfactant from the viewpoint of uniform dispersion of the solid component in the coating solution. The conductive material in the solid component is preferably a carbon material since a carbon material will be uniformly dispersed throughout the surface layer by the surfactant, allowing a uniform conductive path to be formed. The surfactant may be any one that produces an effect of uniformly dispersing the solid component in the coating solution.

Examples of surfactants include, but are not limited to, anionic surfactants such as sulfuric acid ester-type, phosphoric acid ester-type, carboxylic acid-type and sulfonic acid-type surfactants; cationic surfactants such as quaternary ammonium salt-type and amideamine-type surfactants; amphoteric surfactants such as alkyl betaine-type, amidebetaine-type and amineoxide-type surfactants; nonionic surfactants such as ether-type, fatty acid ester-type and alkyl glucoside surfactants; and polymer-type surfactants such as polyacrylic acid, polyacrylic acid salt, polysulfonic acid salt, polynaphthalenesulfonic acid salt, polyalkylene-polyaminealkylene oxide, polyalkylene-polyiminealkylene oxide, polyvinylpyrrolidone and cellulose-type surfactants. These may be used alone or in combinations of two or more in order to prevent aggregation between the filler. Preferred surfactants to be added to the coating solution are ionic surfactants, i.e., one or more selected from the group consisting of anionic surfactants, cationic surfactants and amphoteric surfactants.

The amount of the surfactant is preferably 1 part by weight to 100 parts by weight and more preferably 10 parts by weight to 60 parts by weight, with 100 parts by weight as the total solid component in the coating solution.

### <Resin>

The coating solution of the embodiment (or the solid component in the coating solution) preferably includes a resin from the viewpoint of increasing bonding of the solid component and inhibiting detachment of the surface layer and its shedding from the substrate. Examples of resins include styrene-based resins; acrylic resins; acrylic/urethane-based resins; acrylic/styrene-based resins; vinyl acetate/acrylic-based resins; styrene/butadiene-based resins; acrylonitrile/butadiene-based resins; natural rubber-based resins; polybutadiene-based resins (BR resins); methyl methacrylate/butadiene-based resins; 2-vinylpyridine/styrene/butadiene-based resins (VP resins); chloroprene resins (CR resins); polyolefin-based resins including polyethylene, polypropylene, polybutene, ethylene/propylene/butene binary copolymers or terpolymers, and their mixtures; modified polyolefin-based resins obtained by chlorination or acid modification of polyolefin-based resins; fluorinated resins such as polyvinylidene fluoride or polytetrafluoroethylene; fluorinated rubber binders such as vinylidene fluoride-hexafluoropropylene-tetrafluoroethylene copolymer or ethylene-tetrafluoroethylene copolymer; (meth)acrylate-styrene-butadiene copolymer resins and their hydrogenated forms; polyvinyl alcohol resins; and polyvinyl alcohol/polyacetate copolymer resins.

Acrylic-based resins or styrene-based resins are preferred among these resins from the viewpoint of improving the separator bonding property and heat resistance, with acrylic-based resins being more preferred. As used herein, "acrylic-based resin" encompasses acrylic copolymer resins such as acrylic/urethane-based resins, acrylic/styrene-based resins, acrylic/styrene/butadiene-based resins and vinyl acetate/acrylic-based resins, as well as polymers of acrylic resins. According to the embodiment, the acrylic copolymer is preferably used in the form of a latex from the viewpoint of the separator bonding property and heat resistance, the latex optionally comprising acrylic copolymer particles dispersed in a water solvent or aqueous solvent (a mixture of water with an organic solvent). As used herein, "styrene-based resin" encompasses styrene copolymer resins such as acrylic/styrene-based resins, styrene/butadiene-based resins, acrylic/styrene/butadiene-based resins and 2-vinylpyridine/styrene/butadiene-based resins, as well as polymers of styrene resins.

The amount of the resin is preferably 1 part by weight to 100 parts by weight and more preferably 10 parts by weight to 40 parts by weight, with 100 parts by weight as the total main material in the surface layer.

These resins may also have one or more other components in the compositions mentioned above. The resin of the embodiment is not limited to a single type, and multiple types may be used together in ranges that still allow the effect of the invention to be obtained. For example, a combination of an acrylic-based resin and a styrene-based resin may be used.

### <Coating solution application step>

The coating solution is introduced onto the separator substrate surface by an application step. The method of introducing (applying) the coating solution is not restricted and may be application by die coating or gravure coating, for example, for application in a wetted state onto the surface of the substrate or laminated body. The substrate or laminated body onto which the coating solution has been applied may also be subjected to further processing such as pressing. It is preferred to select the application method and any additional methods based on the coated state, including the degree of spreading of the coating solution when it is introduced onto the substrate surface.

The coating form (pattern) is not particularly restricted and may be selected as necessary from among flat, dotted, lattice-like and striped patterns.

### <Solvent removal step from applied coating solution>

The coating solution that has been applied onto the separator surface may have the solvent removed by a solvent removal step (drying step). The method of removal (drying) is not restricted and may be hot air drying, for example. An example of a specific hot air drying apparatus is an oven, though this is not limitative. The solvent of the coating solution is removed by drying, leaving the solid component alone to form a surface layer. From the viewpoint of stably forming a surface layer with a uniform thickness and structure while avoiding fracture of the surface layer during the drying step, it is preferred to carry out the drying step with a fixed drying speed and a fixed drying time. From the viewpoint of maintaining uniformity of the thickness and structure of the dried surface layer so as not to cause cracking of the surface layer or detachment from the separator substrate, it is preferred to avoid drying the coating solution abruptly in a short time during the drying step.

From the viewpoint of easily forming a surface layer having a surface electrical resistance of 10 Ω to 10,000 Ω, the wet mixture introduced onto the surface of the substrate or laminated body is preferably dried gently at a fixed rate in an atmosphere of 85°C during the drying step. The drying method may be hot air drying, for example. By evaporation of the solvent in the mixture at a fixed rate, the solid component remains as a non-maldistributed layer, forming a surface layer of uniform structure. Moreover, a main material having the median particle size (d50) specified above may be used to adjust the surface electrical resistance of the material forming the surface layer.

### <Intermediate layer forming step>

If desired, the method for producing a separator may comprise an intermediate layer forming step in which an intermediate layer (described below) is formed between the separator substrate and the surface layer.

### <Lead-acid battery separator>

The lead-acid battery separator of the embodiment comprises a substrate and a surface layer that is laminated on at least one side of the substrate and has a surface electrical resistance of 10 Ω to 10,000 Ω. The separator of the embodiment is disposed between the positive electrode and negative electrode and inhibits or prevents electrical short circuiting between the positive electrode and negative electrode. The surface layer may also be laminated on both sides of the substrate, laminated over the entirety of one or both sides of the substrate, or partially laminated on the substrate side(s). For the purpose of the embodiment, the condition that the surface layer is "laminated" on one or both sides of the substrate includes cases where the surface layer is directly laminated on the substrate and cases where it is indirectly laminated across another layer. A separator is usually microporous in order to allow permeation of ions. From the viewpoint of ion permeability, the maximum pore diameter of the separator is preferably 500 nm or smaller, more preferably 400 nm or smaller, even more preferably 300 nm or smaller, yet more preferably 200 nm or smaller and most preferably 150 nm or smaller. The lower limit for the maximum pore diameter can be determined according to the microporosity of the separator, and may be 1 nm or greater, for example.

### <Surface layer>

For the purpose of the embodiment, the surface layer has a surface electrical resistance of 10 Ω to 10,000 Ω, preferably 10 Ω to 5000 Ω and more preferably 10 Ω to 1000 Ω, from the viewpoint of satisfactory cycle characteristics and charge acceptance performance for the lead-acid battery. From the viewpoint of excellent charge acceptance performance after a fixed number of cycles during use of the lead-acid battery, the separator preferably has the surface layer formed on a substrate surface with a uniform thickness and structure.

### <Intermediate layer>

A layer may be formed between the surface layer and the separator substrate for the embodiment. A layer formed between the surface layer and separator substrate will hereunder be referred to as an "intermediate layer". The intermediate layer is composed of one or more laminated bodies. The intermediate layer may be formed on the separator substrate first before forming the surface layer, or the surface layer may be formed on the intermediate layer first, and then set or formed on the separator substrate.

The structure or form of the intermediate layer is not particularly restricted, and it may be a microporous membrane layer, nonwoven fabric layer or void-containing layer, for example.

If the surface electrical resistance of the surface layer in the lead-acid battery separator of the embodiment is 10 Ω or greater it can effectively serve as an auxiliary conductive path. Specifically, if current preferentially flows to the electrode instead of the surface layer then the overall function of the battery will be maintained. By limiting the surface resistivity of the surface layer to 10,000 Ω or lower, the separator of the embodiment can exhibit both excellent cycle characteristics and excellent charge acceptance performance (DCA) during use of the lead-acid battery.

The surface electrical resistance of the surface layer can be adjusted by changing the materials such as the substrate, surface layer, resin and surfactant, the thickness of the surface layer, and the conditions for forming the surface layer.

The thickness of the surface layer of the embodiment is preferably 0.1 to 30 µm, more preferably 0.1 to 25 µm, even more preferably 0.1 to 20 µm and most preferably 0.1 to 15 µm, from the viewpoint of inhibiting detachment of the surface layer and shedding of the separator, and of forming a uniform surface layer on the substrate surface.

The surface layer of the embodiment can stably improve the charge acceptance and cycle characteristics. Without being limited to theory, it is thought that this is possible because the surface layer functions as an auxiliary conductive path, thus promoting supply of electrons and decomposition of lead sulfate in the decomposition reaction of lead sulfate at the negative electrode during charging of the battery. It is thought that as a result, a lead acid battery comprising positive and negative electrodes and a separator with a surface layer, has accelerated charging and higher charge acceptance. Promoting decomposition of lead sulfate inhibits sulfation occurring at the electrodes. It is thought that malfunctioning is inhibited and the cycle characteristic is improved due to inhibited sulfation at the electrode of the embodiment.

### <Substrate>

The substrate is not particularly restricted so long as it is microporous enough to allow passage of ions, and it may be a porous membrane produced from a natural or synthetic material, preferred materials being thermoplastic polymers such as polyvinyls and polyolefins, thermosetting polymers such as phenol resins, rubber materials such as natural and synthetic rubber or latexes, fiber materials such as synthetic wood pulp (SWP), glass fiber, synthetic fiber or cellulose fibers, and any combination of the foregoing, among which microporous membranes produced from thermoplastic polymers are more preferred. An example of a thermoplastic polymer to be used for the embodiment is an acid-resistant thermoplastic material that is used for lead-acid batteries. Examples of preferred thermoplastic polymers are polyvinyl and polyolefin compounds. Polyvinyl chloride (PVC) is an example of a polyvinyl compound. Polyethylene and polypropylene are examples of polyolefin compounds. Ultrahigh molecular weight polyethylene (UHMWPE) is an example of a polyethylene compound.

### <Lead-acid battery>

The lead-acid battery of the embodiment comprises a separator for the lead-acid battery of the embodiment. The lead-acid battery is a lead-acid battery having a positive electrode and a negative electrode, and a separator of the embodiment disposed between the positive electrode and negative electrode. An electrolyte used may be an electrolyte solution containing dilute sulfuric acid. The positive electrode lattice forming the positive electrode may be made of lead or a lead alloy, and the positive electrode active material may be made of lead oxide, such as lead dioxide. The negative electrode lattice forming the negative electrode may be made of lead or a lead alloy, and the negative electrode active material may be made of lead, or may be itself a lead negative electrode, in a cavernous form, for example. The active materials of the positive electrode and negative electrode may also comprise up to 50 weight% of metal elements other than lead or lead alloy. The dilute sulfuric acid is sulfuric acid with a specific gravity of 1.1 to 1.4, and the electrolyte may include additives. Such additives may include aluminum ion, for example, from the viewpoint of inhibiting sulfation. Other additives include metal ions such as lithium ion and sodium ion.

By providing a separator of the embodiment between the positive electrode and negative electrode, it is possible to reduce decomposition reaction of water at the negative electrode during charging of the lead-acid battery, and particularly during charging at PSoC, and to obtain a lead-acid battery with excellent water loss properties. The lead-acid battery separator of the embodiment may be either an open-type lead-acid battery or a control valve-regulated lead-acid battery.

### <Method for producing lead-acid battery separator>

### <Fabrication of substrate>

An example of a substrate comprising a polyolefin such as ultrahigh molecular weight polyethylene as the substrate will now be used to describe the method for production, but the substrate is not limited to one obtained by this production method so long as a surface layer of the embodiment is formed on it.

The method of producing a substrate includes a step of preparing a thermoplastic polymer such as ultrahigh molecular weight polyethylene (UHMWPE); a step of preparing a particulate filler; a step of preparing a processing plasticizer which is a liquid at room temperature (25°C); a step of mixing the UHMWPE, particulate filler and processing plasticizer to form a mixture; a step of passing the mixture through a die such as a slot die or inflation die for extrusion into a sheet; and an extraction step in which the plasticizer is partially or totally removed from the sheet to form a microporous matrix. After the step of forming the sheet and before the extraction step, the sheet may be further processed by a casting method, calender method or inflation method onto a cooling roller. The sheet processed by a casting method or calender method may then be subjected to the extraction step to have the plasticizer partially or totally removed to form a microporous matrix.

The microporous matrix obtained by this method includes UHMWPE, a plasticizer (when partially extracted) and a thoroughly matrix-dispersed particulate filler. The particulate filler preferably constitutes 5 wt% to 95 wt% of the microporous matrix. The term "microporous matrix" as used herein refers to a structure having an interconnected porous network in which the entire microporous matrix is connected by the constituent material(s). The pores preferably constitute 25% to 90% of the volume of the microporous matrix. The method of producing the substrate may further include, after the extraction step, a step of stretching the microporous matrix; and a step of calendering the stretched microporous matrix to produce the final microporous material. Calendering can form a substrate with excellent dimensional stability even at high temperature.

### <Positive electrode side ribs>

The microporous matrix of the embodiment may have ribs on the positive electrode side when it is to be disposed in the lead-acid battery. There may also be provided a back web on the microporous matrix and a series of positive electrode side ribs extending from the back web and disposed preferably in the longitudinal direction (machine direction: MD) of the separator. The positive electrode side ribs may be serrated. According to a different embodiment, the positive electrode side ribs may be grooves, texture ranges, battlement (parapet) ribs, broken ribs, slanted ribs, straight ribs, curved or sine wave ribs, zigzag ribs, embossing or dimples, or any combinations of these. The positive electrode side ribs may extend from a predetermined region of the back web, and/or they may extend to other back rib regions.

### <Negative electrode side ribs>

The microporous matrix of the embodiment is such that the separator is disposed inside the battery with the ribs facing the positive electrode, but this is not essential. The ribs may be referred to as positive electrode side ribs when facing the positive electrode. Ribs extending from the opposite side of the microporous matrix serving as the separator may also be facing the negative electrode and disposed in the MD or TD. When the negative electrode side ribs are disposed along the TD they are generally referred to as "cross ribs", and are therefore referred to as negative electrode side cross ribs or "Negative Cross Ribs" (NCR) as in the following description. The separator will typically be disposed in the battery and positioned with the negative cross ribs facing the negative electrode, but this is not essential. Negative electrode ribs may also be the same ribs or smaller ribs than the positive electrode side ribs, or longitudinal miniribs, crossing miniribs, NCR, diagonal ribs or combinations of the foregoing. The surface on the negative electrode side and/or positive electrode side of the separator may totally or partially lack ribs, so that one or both sides of the separator are smooth or flat.

### <Method for producing lead-acid battery>

A lead-acid battery comprising the separator of the embodiment comprises a positive electrode and a negative electrode, and a separator of the embodiment between the positive electrode and negative electrode. The form of the lead-acid battery separator may be determined so as to match the structural members of the lead-acid battery. The lead-acid battery of the embodiment preferably includes a battery case, a positive electrode, a negative electrode and dilute sulfuric acid as an electrolyte, and has a separator of the invention disposed between the positive electrode and the negative electrode. The positive electrode lattice forming the positive electrode may be lead or a lead alloy, and the positive electrode active material may be lead oxide, such as lead dioxide. The negative electrode lattice forming the negative electrode may be made of lead or a lead alloy, and the negative electrode active material may be made of lead, or may be itself a lead negative electrode, in a cavernous form, for example. The active materials of the positive electrode and negative electrode may also have other metal elements present in the composition at 30 weight% or lower. The dilute sulfuric acid referred to above is sulfuric acid with a specific gravity of 1.1 to 1.4, and it may also include additives. For this embodiment, a separator with a surface layer is used in a lead-acid battery to partially limit formation of the conductive path on the separator surface, resulting in reduced decomposition reaction of water and allowing deterioration of the water loss property to be inhibited. It is therefore preferred to dispose the separator of the embodiment between the positive electrode and negative electrode of the lead-acid battery. The lead-acid battery separator of the embodiment can be used for either an open-type lead-acid battery or a valve-regulated lead-acid battery, and is suitable as a separator for a flooded battery (FB) and especially an enhanced flooded battery (EFB).

### EXAMPLES

The present invention will now be explained in greater detail by Examples, with the understanding that the Examples are merely illustrative and do not restrict the scope of the invention in any way. Table 1 shows the evaluation results for the separators and lead-acid batteries obtained in the Examples and Comparative Examples. The evaluation methods employed for each of the parameters will now be described.

### <Surface electrical resistance>

The surface electrical resistance was measured using an RM3545 RESISTANCE METER by Hioki E.E. Corp., with a four-terminal probe (5.0 mm pitch) as the probe of the resistance meter. For measurement of the surface electrical resistance of the separator removed from the completed lead-acid battery, the following procedure is carried out before measurement with the resistance meter. (1) The removed separator is cleaned with distilled water. (2) The pH of the washing water is measured, and washing is ended when the pH reaches neutral to weakly acidic. Physical scrubbing is avoided in (1) and (2), however. (3) The separator is allowed to naturally dry. Rapid drying treatment such as hot air drying is avoided, however.

The measuring software for the resistance meter was the four-terminal probe resistivity meter - PC application. A measuring mode of "normal measurement" and measuring units of "resistance [Ω]" were selected. The measuring conditions were as follows.

### [Measuring conditions]

Sample long side: 100 mm
Sample short side: 100 mm
Sample thickness: 10 µm
x-coordinate: 50 mm
y-coordinate: 50 mm
Probe: 5.0 mm

The resistance of the sample surface layer was measured at 6 points under the aforementioned measuring conditions and the average was calculated, resulting in the sample surface electrical resistances listed in Table 1. The units were Ω.

### (Number of cycles (PSoC cycle life)>

Using a polycarbonate battery case, two lead oxide positive electrodes, and one lead negative electrode inserted in an envelope-shaped separator, first dilute sulfuric acid with a specific gravity of 1.28 was injected into the battery case as the electrolyte, to fabricate a lead-acid battery (2 V single cell). The lead-acid battery was used for a lead-acid battery charge-discharge cycling test at PSoC. An ACD-01 G-Version charge-discharge test apparatus by Aska Electronic Co., Ltd. was used for the test. The specific conditions in the charge-discharge cycling test were as follows.

After initial discharge of the lead-acid battery in the fully charged state at 25°C as indicated by (1) below, a cycle of (2) to (3) was repeated until the end-of-discharge voltage fell below 1.75 V, recording the number of repeated cycles as the PSoC cycle life.
(1) Initial discharge: Constant-current discharge for 150 minutes at a current rate of 0.2 C (4 × I20).
(2) Charge: Constant-current/constant-voltage charging for 40 minutes at a current rate of 0.35 C (7 × I20), voltage value of 2.4 V.
(3) Discharge: Constant-current/constant-voltage discharge for 30 minutes at a current rate of 0.35 C (7 × I20), voltage value of 1.75 V.

### <DCA (Dynamic charge acceptance)>

The DCA was measured by pausing the lead-acid battery during measurement of the number of cycles in the charge-discharge cycling test described above. Specifically, cycling was paused at completion of 510 cycles and charge-discharge was carried out under the following conditions, measuring the charging current value.
(4) Charge (100% SoC): Constant-current/constant-voltage charging for 24 hours at a current rate of 0.25 C (5 × I20), voltage value of 2.67 V.
(5) Discharge (90% SoC): Constant-current discharge for 60 minutes at a current rate of 0.1 C (2 × I20).
(6) Charge: Constant-current/constant-voltage charging for 60 seconds at a current rate of 2.0 C (40 × I20), voltage value of 2.47 V.
(7) Discharge (80% SoC): Constant-current discharge for 60 minutes at a current rate of 0.1 C (2 × I20).
(8) Charge: Constant-current/constant-voltage charging for 60 seconds at a current rate of 2.0 C (40 × I20), voltage value of 2.47 V.
(9) Discharge (70% SoC): Constant-current discharge for 60 minutes at a current rate of 0.1 C (2 × I20).
(10) Charge: Constant-current/constant-voltage charging for 60 seconds at a current rate of 2.0 C (40 × I20), voltage value of 2.47 V.
(11) Discharge (60% SoC): Constant-current discharge for 60 minutes at a current rate of 0.1 C (2 × I20).
(12) Charge: Constant-current/constant-voltage charging for 60 seconds at a current rate of 2.0 C (40 × I20), voltage value of 2.47 V.
For the charging in (10), the current value at 60 seconds was recorded and the current value was divided by the electrode capacity to calculate the DCA. The calculated DCA values are listed in Table 1. The units are A/Ah. Upon completion of (12) above and after charging again in (4), the charge-discharge cycling test (1) described above was carried out and charge-discharge cycle testing was resumed from the 511th cycle onward.

### <Membrane thickness>

Observation and measurement of the membrane thickness was carried out using a VHX-6000 digital microscope by Keyence Corp. The separator cross-section was observed with a digital microscope (200x magnification), and the cross-section thickness of the separator coating layer was measured at 3 arbitrary points, recording the arithmetic mean of the 3 points as listed in Table 1. The units were µm.

### <Median particle size (d50)>

The median particle size was measured using an MT3300EXII (optical system) and an SDC (sample circulator) by Microtrac Bell. MicrotracII was used as the measuring software. The measuring conditions were as follows.

### [Measuring conditions]

Set zero time: 10
Measuring time: 10
Measuring frequency: 1
The analysis conditions must be changed according to the main material of the surface layer. The following is an example of analysis conditions for a sample which is a coating solution (water solvent) used to form a surface layer using carbon as the main material.

### [Analysis conditions]

Permeability: absorption
Particle refractive index: 1.40
Form: Non-spherical
Solvent refractive index: 1.333
As a non-coating solution sample, the surface layer was shaved from the laminated body of the separator and dissolved in a resin-dissolving organic solvent (such as hexane or acetone), and then dispersed by ultrasonic waves.

### <Viscosity>

For high molecular weight compounds added to the coating solution, a 1 weight% aqueous solution was prepared beforehand and the viscosity was measured. A VISCOMETER TVB-10 by Toki Sangyo Co., Ltd. was used for the measurement. The measuring conditions were as follows.

### [Measuring conditions]

Measuring container: 300 ml beaker (ϕ73 mm)
Spindle (rotor name/rotor No.):
≥500 mPa·s and <2000 mPa·s: M3/No.22
≥2000 MPa.s and < 10 Pa·s: M4/No.23
Rotational speed: 60 rpm
Rotor guard: Present
Measuring temperature: 25°C (room temperature)
A 1 weight% aqueous solution of the high molecular weight compound to be measured was placed in the container. The guard-fitted spindle was then immersed in the aqueous solution, the liquid level was matched to the immersion mark shown on the spindle, and the viscosity was measured. The measured values were rounded to the hundreds place and expressed in units of thousands.

### <Separator surface observation>

Surface SEM (scanning electron microscope) observation of the separator was used for planar viewing of the separator at 40x magnification with an effective range of 4 mm × 3 mm, measuring area A for the rib protrusion and area B for the base section, and calculating A/(A + B). The "effective range", for the purpose of the present specification, is a range allowing observation during use of the microscope.

Details regarding the samples of the Examples and Comparative Examples are described below.

### <Example 1>

The substrate used was a polyethylene separator (RipTide C by Daramic; back web thickness: 300 µm, serrated ribs, rib height: 400 µm, maximum pore diameter: 120 nm, A/(A + B): 0.08). A slurry for formation of the surface layer was prepared first. As the solid component, carbon black with a median particle size of about 1 µm, an ionic surfactant, an acrylic copolymer latex and a high molecular weight compound were dispersed and mixed in a water solvent (100 weight% water) to prepare a coating solution. The ionic surfactant used was 30 parts by weight of POLITY^{R} P-2000 by Lion Specialty Chemicals Co., Ltd. with respect to 100 parts by weight of the carbon black in the slurry. The acrylic copolymer latex used was 20 parts by weight of POLYTRON^{R} A65S by Asahi Kasei KABUSHIKI KAISHA with respect to 100 parts by weight of the carbon black in the slurry. The high molecular weight compound used was 10 parts by weight (6.3 weight% of the total solid component) of carboxymethyl cellulose (CMC) (CELLOGEN BSH-12 by Dai-ichi Kogyo Seiyaku Co., Ltd., 1 weight% aqueous solution viscosity: 6,000 mPa·s) with respect to 100 parts by weight of the carbon black in the slurry. An applicator was used for manual coating (by hand) of the slurry onto the back web surface of the substrate, after which the coating was dried for 5 minutes in an oven at 80°C to obtain a separator provided with a surface layer. The applicator gap (clearance formed between the separator and applicator) was 45 µm. The obtained separator was cut into a rectangular shape and folded in half in the longitudinal direction with the surface layer facing inward, closing both ends of the separator in the direction perpendicular to the folded edge, to produce an envelope-shaped separator with one open side. The negative electrode was inserted into the envelope-shaped separator. The substrate, the surface layer and the lead-acid battery were evaluated by the evaluation methods described above, with the results shown in Table 1.

### <Example 2>

This was carried out in the same manner as Example 1, except that for the coating solution, the mixing ratio of CMC of Example 1 was changed to 4 parts by weight (2.6 weight% of the total solid component).

### <Example 3>

This was carried out in the same manner as Example 1, except that for the coating solution, the CMC of Example 1 was changed to CELLOGEN BSH-15 by Dai-ichi Kogyo Seiyaku Co., Ltd. (1 weight% aqueous solution (viscosity: 9,000 mPa·s) and the mixing ratio thereof was 2 parts by weight (1.3 weight% of the total solid component).

### <Comparative Example 1>

This was carried out in the same manner as Example 1, except that for the coating solution, the CMC of Example 1 was changed to HE-1500F by Dai-ichi Kogyo Seiyaku Co., Ltd. (1 weight% aqueous solution (viscosity: 2,000 mPa·s) and the mixing ratio thereof was 6 parts by weight (3.8 weight% of the total solid component).

### <Comparative Example 2>

This was carried out in the same manner as Example 1, except that for the slurry, the mixing ratio of CMC of Example 1 was changed to 0 parts by weight.

### <Comparative Example 3>

This was carried out in the same manner as Example 1, except that only the substrate was used, without a surface layer.

The results for the Examples and Comparative Examples are shown in Table 1.

**[Table 1]**

| | | Example 1 | Example 2 | Example 3 | Comparative Example 1 | Comparative Example 2 | Comparative Example 3 |
|---|---|---|---|---|---|---|---|
| Coated membrane | Conductive material | Carbon | Carbon | Carbon | Carbon | Carbon | - |
| | High molecular weight compound addition (weight%) | 6.3% | 2.6% | 1.3% | 3.8% | 0.0% | - |
| | Viscosity of high molecular weight compound 1 weight% aqueous solution /mPa·s | 6000 | 6000 | 9000 | 2000 | - | - |
| | Membrane thickness /µm | 10.2 | 8.4 | 10.1 | 11.0 | 9.8 | - |
| | Surface electrical resistance /Ω | 1,300 | 1,700 | 8,800 | 124,000 | 1.E+09 | 1.E+10 |
| Battery performance | DCA/ A/Ah | 0.80 | 0.79 | 0.77 | 0.75 | 0.76 | 0.70 |
| | Number of cycles | 1285 | 1285 | 1268 | 1080 | 1073 | 1122 |

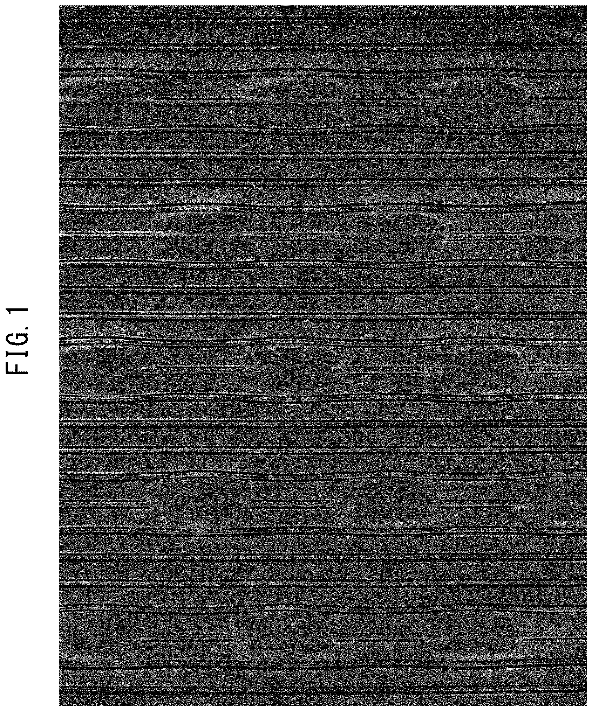

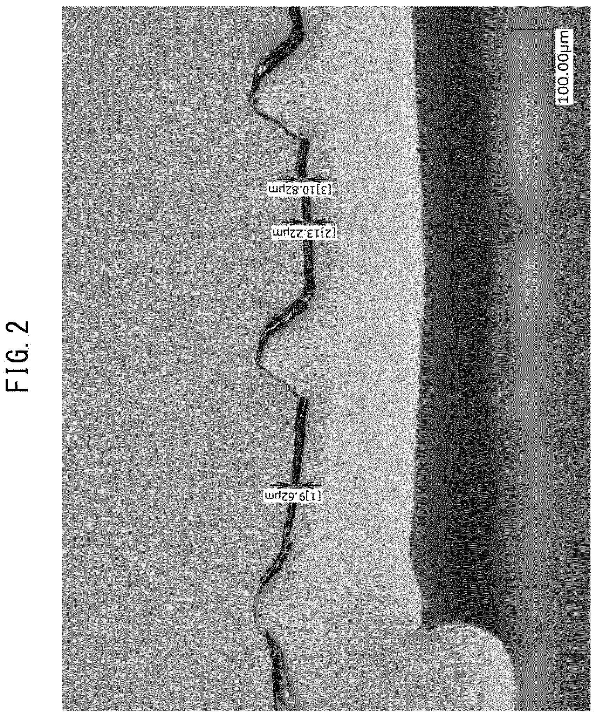

Fig. 1 shows a 20x observation image of a lead-acid battery separator comprising the surface layer of Example 1, taken using a digital microscope. Fig. 2 shows a 200x observation image of a cross-section of a lead-acid battery separator comprising the surface layer of Example 1, taken using a digital microscope. From Figs. 1 and 2 it can be seen that a surface layer having uniform structure and thickness was stably formed on the substrate surface.

### INDUSTRIAL APPLICABILITY

The lead-acid battery separator of the invention is useful for use in a lead-acid battery, such as a flooded battery (FB), and is particularly suitable as a separator for an enhanced flooded battery (EFB).

## Claims

1. A method for producing a lead-acid battery separator comprising a surface layer forming step which includes:
a coating solution preparation step in which a coating solution comprising a solvent, a conductive material and a high molecular weight compound is prepared,
a coating step in which the coating solution obtained in the coating solution preparation step is coated onto at least one side of a separator substrate, and
a solvent removal step in which the solvent is removed from the coating solution that has been coated onto the separator substrate in the coating step,
wherein the high molecular weight compound is present in an amount of 0.1 weight% to 25 weight% with respect to a solid component of the coating solution.

2. The method for producing a lead-acid battery separator according to claim 1,
wherein the high molecular weight compound has a viscosity of 3000 mPa·s to 10,000 mPa·s at 20°C when dissolved at 1 weight% with respect to a solvent in which the high molecular weight compound is soluble.

3. The method for producing a lead-acid battery separator according to claim 1 or 2,
wherein the high molecular weight compound is present in an amount of 1.0 weight% to 10.0 weight% with respect to the solid component of the coating solution.

4. The method for producing a lead-acid battery separator according to any one of claims 1 to 3,
wherein the conductive material includes a carbon material.

5. The method for producing a lead-acid battery separator according to any one of claims 1 to 4,
wherein the solvent is a solvent which is capable of dissolving the high molecular weight compound.

6. The method for producing a lead-acid battery separator according to any one of claims 1 to 5,
wherein the surface layer formed in the surface layer forming step has a surface electrical resistance of 10 Ω to 10,000 Ω.

7. The method for producing a lead-acid battery separator according to any one of claims 1 to 6,
wherein a surface layer formed in the surface layer forming step has a thickness of 0.1 µm to 30 µm.

8. The method for producing a lead-acid battery separator according to any one of claims 1 to 7,
which comprises an intermediate layer forming step in which an intermediate layer is formed between the separator substrate and the surface layer formed in the surface layer forming step.

9. A lead-acid battery separator comprising:
a separator substrate, and
a surface layer laminated on at least one side of the separator substrate and having a surface electrical resistance of 10 Ω to 10,000 Ω.

10. The lead-acid battery separator according to claim 9, wherein the surface layer comprises a conductive material.

11. The lead-acid battery separator according to claim 9 or 10, wherein:
the surface layer comprises a high molecular weight compound, the high molecular weight compound having a viscosity of 3000 mPa·s to 10,000 mPa·s when dissolved at 20°C in a solvent in which the high molecular weight compound is soluble.

12. The lead-acid battery separator according to any one of claims 9 to 11, which comprises at least one intermediate layer between the separator substrate and the surface layer.

13. The lead-acid battery separator according to any one of claims 9 to 12,
wherein a thickness of the surface layer is 0.1 µm to 30 µm.

14. The lead-acid battery separator according to any one of claims 9 to 13, wherein the substrate has a rib, the rib being at least one selected from the group consisting of serrated ribs, slanted ribs, broken ribs, straight ribs, embossings, protrusions and combinations thereof.

15. A lead-acid battery comprising a positive electrode, a negative electrode, and the lead-acid battery separator according to any one of claims 9 to 14.

16. The lead-acid battery according to claim 15, wherein the surface layer is facing the negative electrode and in contact with the negative electrode.
